# EUROPÄISCHE PATENTSCHRIFT

(11) **EP 2 903 086 B1**
(45) Veröffentlichungstag und Bekanntmachung des Hinweises auf die Patenterteilung: **03.02.2016**
(21) Anmeldenummer: 14153736.5
(22) Anmeldetag: 04.02.2014
(51) Int. Cl.: H01Q 1/22, H01Q 1/38

(54) **RFID-Lesevorrichtung zur Regalbelegungserkennung**
RFID reading device for shelf occupancy detection
Dispositif de lecture RFID pour la détection de l'occupation d'étagères

(43) Veröffentlichungstag der Anmeldung: 05.08.2015
(73) Patentinhaber: SICK AG, 79183 Waldkirch (DE)
(72) Erfinder: Pudenz, Florian, 22049 Hamburg (DE); Struve, Dirk, 22177 Hamburg (DE)
(74) Vertreter: Hehl, Ulrich

(56) Entgegenhaltungen:
- WO-A1-2009/011601
- WO-A1-2010/151132
- WO-A2-2004/102735
- US-A1- 2008 284 654
- US-A1- 2009 231 140
- US-B1- 7 310 070

## Beschreibung

Die Erfindung betrifft eine RFID-Lesevorrichtung mit einer Antenne zur Regalbelegungserkennung nach dem Oberbegriff von Anspruch 1.

RFID-Lesesysteme dienen der automatischen Identifikation von Objekten. Dazu werden an den Objekten befestigte RFID-Transponder ausgelesen und gegebenenfalls Informationen in den Transponder zurückgeschrieben. Die erfassten Informationen werden verwendet, um den Aufenthaltsort, das Ziel oder sonstige Eigenschaften der Objekte zu erfassen und dadurch Lagerung und Fluss von Gütern und Produkten zu steuern.

RFID-Transponder können prinzipiell aktiv sein, also eine eigene Energieversorgung aufweisen, oder passiv ausgeführt sein. Unabhängig davon, ob es sich um aktive oder passive Komponenten handelt, sind RFID Transponder, die nach dem Backscatter-Prinzip arbeiten, dadurch charakterisiert, dass sie das Sendesignal des Lesegerätes reflektieren und dabei durch Modulation in der Amplitude verändern. Sie erzeugen dabei kein eigenes Hochfrequenzsignal. In der Praxis eignen sich aktive Transponder für die hier betrachteten Anwendungen aber weniger, weil durch die Energieversorgung die Stückpreise solcher Transponder nicht das für den Massenmarkt erforderliche geringe Niveau erreichen können. Deshalb werden zumeist passive Transponder ohne eigene Energieversorgung eingesetzt. In beiden Fällen wird durch elektromagnetische Strahlung des Lesegerätes der Transponder zur Abstrahlung der gespeicherten Information angeregt, wobei passive Transponder die notwendige Energie aus der Sendeenergie des Lesesystems beziehen. In dem etablierten Ultrahochfrequenzstandard (UHF) ISO 18000-6 werden passive Transponder nach dem Backscatter-Verfahren ausgelesen.

Die mit Transpondern versehenen Objekte werden vor allem bei der Lagerung häufig geordnet gestapelt und in mehreren Ebenen oder Reihen angeordnet. Das typische Beispiel hierfür ist ein Regal mit Fächern oder Behälterreihen. In diesem Fall soll das RFID-Lesesystem die Anforderung erfüllen, die jeweils aktuelle Regalbelegung zu erfassen, also welche Fächer belegt sind oder ob sich an einer bestimmten Regalposition ein Behälter befindet und was das jeweilige Fach oder der Behälter momentan enthält. Durch Zurückschreiben auf den Transponder kann die Information der Transponder auch bei Nachfüllen oder Entnahme von Objekten konsistent gehalten werden. Transponder können sich hierbei sowohl an den jeweiligen Fächern beziehungsweise Behältern als auch an den einzelnen darin gelagerten Objekten befinden. Eine Anwendung für die automatische Erfassung der Regalbelegung ist die Produktionsprozesssteuerung, wo die Lagerhaltung durch Kenntnis der lokalen Bestände und des an der Entnahme gemessenen momentanen Bedarfs von Ausgangsmaterialien und Zwischenprodukten erheblich reduziert werden kann (Kanban-Prinzip).

RFID-Systeme zur Regalbelegungserkennung müssen mit den geringen Abständen zwischen Fächern und metallischen Ausführungen der Regale oder Objekte zurechtkommen. Sofern anstelle von Regalfächern Behälterreihen vorgesehen sind, kommt noch hinzu, dass auch die Behälter oft aus Metall hergestellt sind und zudem in ihren Abmessungen und Positionen innerhalb der Reihen variieren.

Im Stand der Technik zur Regalbelegungserkennung eingesetzte RFID-Systeme verwenden abgesetzte Antennen pro Regalebene, Behälterreihe oder sogar Behälter. Die eigentliche RFID-Lesevorrichtung ist dabei beispielsweise seitlich am Regal montiert. Das erfordert allerdings einen erheblichen Aufwand zur Installation der Antennen und vor allem deren Verkabelung. Dieser Aufwand fällt nicht nur einmalig an, sondern erneut bei Wartung oder Veränderungen des Regals, beispielsweise bei Einsatz anderer Behälter. Ein Beispiel dafür ist die EP 2 234 043, die ein bewegliches Regalsystem für eine Bibliothek mit einem RFID-System offenbart, welches Transponder an den einzelnen Büchern ausliest. Dazu sind UHF-Antennen an den einzelnen Regalebenen vorgesehen. Aus der US 7 757 947 B2 oder der US 2009 0322486 A1 ist jeweils ein Lagerregal bekannt, dessen Lagerbehälter jeweils mit einer Antenne versehen sind. In einer weitere Regalanordnung mit RFID-Antennen gemäß WO 2007/050248 A1 werden Antennen zwischen Stangen des Regals montiert und anschließend verkleidet.

Aus der WO2004/102735 A2 ist eine Vorrichtung mit einer Nahbereichsantenne bekannt, deren Antennenstrukturen jeweils zwei benachbarte Schleifen mit zwei zentralen Speisungskontakten aufweisen. Eine Leiterkarte mit mehreren nebeneinanderliegenden solchen Antennenstrukturen kann auf eine Trägerplatte gesetzt und nach oben mit einer Abdeckung abgeschlossen werden.

Die WO 2009/011601 A1 offenbart eine Panelantenne mit einer Leiterkarte, auf der Antennenpatches vorgesehen sind. Um die Leiterkarte wird ein Metallrahmen gebogen, um für mechanische Stabilität zu sorgen und unerwünschte Effekte durch inaktive Bereiche der leitenden Schichten zu unterdrücken.

Ohne jeden Zusammenhang mit der RFID-Technologie ist beispielsweise aus der EP 1 574 776 B1 bekannt, Lichtgittergehäuse im Strangpressverfahren herzustellen. Lichtgitter sind zwar in einer Vielzahl von Anwendungen einsetzbar, aber als Ersatz für eine RFID-Lesevorrichtung zur Regalbelegungserkennung überhaupt nicht geeignet.

Es ist daher Aufgabe der Erfindung, eine RFID-Lesevorrichtung anzugeben, die für die Regalbelegungserkennung besser geeignet ist.

Diese Aufgabe wird durch eine RFID-Lesevorrichtung mit einer Antenne zur Regalbelegungserkennung nach Anspruch 1 gelöst. Dabei geht die Erfindung von dem Grundgedanken aus, das Gehäuse der Antenne stangenartig auszubilden. Auf diese Weise kann es sehr einfach in der gewünschten Lage mit der Regalkonstruktion verbunden oder darin integriert werden. Ein langgestrecktes Hohlprofil erfüllt diese Anforderung und ermöglicht, darin eine Antennenleiterkarte unterzubringen. Diese wird beispielsweise von der Stirnseite her eingeschoben, oder das Hohlprofil wird an seiner Längsseite etwas aufgebogen, woraufhin es nach Einsetzen der Antennenleiterkarte in seine ursprüngliche Form zurückfedert und die Antennenleiterkarte sicher hält. Das Hohlprofil weist bevorzugt unabhängig von der Art der Montage der Antennenleiterkarte eine zum Halten der Antennenleiterkarte geeignete Führungsschiene oder Führungsnut auf.

Die Erfindung hat den Vorteil, dass eine besonders kompakte und robuste Bauform mit integrierten Antennen bei hoher Antennendichte in einem Gehäuse erreicht wird. Es fällt praktisch kein Verkabelungsaufwand mehr an. Das Hohlprofil bietet eine Vielzahl geometrischer Freiheitsgrade bei einfacher Herstellung. Die Antennenleiterkarte unterstützt einen modularen Aufbau und bietet zahlreiche Optionen für das Antennendesign.

Das Hohlprofilelement weist bevorzugt über seine gesamte Länge den gleichen Querschnitt auf. Das erleichtert die Herstellung und Handhabung. Außerdem können auf diese Weise Antennen nahezu beliebiger Länge hergestellt werden.

Das Hohlprofilelement ist bevorzugt ein Strangpressprofil. Diese Technik eignet sich, auf einfache Weise ein Hohlprofil mit gewünschtem Querschnitt in verschiedenen Längen herzustellen.

Die Antennenleiterkarte weist bevorzugt eine Schlitzstruktur oder einen Antennenpatch auf. Die Schlitzstruktur oder der Antennenpatch bilden einen Antennenstrahler, der beispielsweise von einer zusätzlich in das Hohlprofilelement eingesetzten Kopplerleiterkarte angeregt wird oder umgekehrt. Ebenso kann die Antennenleiterkarte in einem Sandwichaufbau selbst die Funktion der Kopplerleiterkarte übernehmen.

Das Hohlprofilelement weist bevorzugt im Querschnitt eine gefaltete Außenkontur mit einer Vielzahl von Einbuchtungen und/oder Vorsprüngen auf. Hierbei dient schon die Außenkontur des Gehäuses selbst als Antennenstruktur. In einer Querschnittsbetrachtung wird dazu das Hohlprofil nicht einfach rund oder rechteckig geformt, sondern vielfach zu einem zweidimensionalen Muster gefaltet. Dadurch verbleibt über Einbuchtungen beziehungsweise Vorsprünge eine verästelte Metallstruktur. Trotz sehr kompakter Größe des Hohlprofilelements erreicht die Außenkontur durch die Faltungen die für die Antennenstruktur und deren gewünschte Resonanzfrequenz erforderliche Länge. Die Antennenleiterkarte muss hier nur noch die Funktion der Einspeisung erfüllen.

Vorzugsweise ist eine Vielzahl von Antennenleiterkarten nebeneinander in das Hohlprofilelement eingesetzt und auf diese Weise eine Vielzahl von Antennenmodulen gebildet. Damit kann ein Hohlprofilelement variabler Länge bestückt und so in einem einheitlichen Konzept eine Variantenvielfalt mit unterschiedlichen Antennengrößen bei wenig Fertigungsaufwand realisiert werden. Jede der Antennenleiterkarten kann bereits für sich mehrere Einzelantennen tragen, vorzugsweise zur Reduzierung von Bauteilen jede Antennenkarte gleich viele Einzelantennen.

Die Antennenmodule sind bevorzugt einzeln oder kombiniert ansteuerbar, um mit der Antenne Transponder an einem bestimmten Antennenabschnitt zu lesen. Sofern eine Antennenleiterkarte mehrere Einzelantennen umfasst, sind vorzugsweise auch die Einzelantennen individuell oder kombiniert ansprechbar. Der Antennenabschnitt entspricht einem bestimmten Lesebereich längs dem Hohlprofilelement, etwa einem Regalfach oder Regalabschnitt oder einem dort gelagerten Behälter.

Die RFID-Lesevorrichtung ist bevorzugt dafür ausgebildet, Antennenmodule und Regalabschnitte einander zuzuordnen. Bei Antennenleiterkarten mit mehreren Einzelantennen kann die Zuordnung auch auf Ebene von Einzelantennen statt Antennenmodulen erfolgen. Funktional entsteht jeweils eine Antenne je Regalabschnitt, Regalfach oder Behälter.

Die Antenne weist bevorzugt den Antennenmodulen zugeordnete Anzeigeelemente auf. Dadurch erhält der Benutzer ein optisches, ortsspezifisches Feedback. Auch die Anzeige kann über die Antennenleiterkarte oder eine weitere Leiterkarte in dem Hohlprofilelement eingesetzt sein, indem in dem Hohlprofilelement entsprechende Öffnungen nach außen zur Betrachtung der Anzeige angebracht werden. Sehr kleine Öffnungen genügen, um eine Lichtquelle wie eine LED oder auch nur deren Licht nach außen treten zu lassen. Über Blinksequenzen oder Farben können auch mit einer LED diverse Informationen angezeigt werden.

Die Antennenleiterkarte weist vorzugsweise Anpassungselemente zur Anpassung der Antenneneigenschaften auf. Eine Umgebungsanpassung geschieht beispielsweise über steuerbare Kapazitäten. So werden nicht genutzte Antennen verstimmt und gar nicht erst angeregt, oder eine bessere Richtwirkung senkrecht zur Längserstreckung des Hohlprofilelements erzielt, um Transponder in einem bestimmten Regalabschnitt zu erfassen.

Das Hohlprofilelement ist bevorzugt parallel zu Regalelementen angeordnet oder als Regalelement genutzt. Je nach Ausführungsform ist das Hohlprofilelement selbst Teil des Regals, dient zu dessen Stabilisierung oder ist zumindest so in das Regal eingebaut, dass es anders als eine herkömmliche Verkabelung keine Abläufe stört. Das Hohlprofilelement kann waagerecht oder senkrecht montiert sein, um gezielt entsprechend zueinander angeordnete Regalabschnitte oder Behälter zu erfassen. In das Hohlprofilelement ist bevorzugt mindestens eine Systemleiterkarte mit Komponenten der RFID-Lesevorrichtung eingesetzt. Dadurch wird das Hohlprofilelement zum Gehäuse nicht nur der Antenne, sondern auch weiterer Systemkomponenten, insbesondere einer funktionsfähigen RFID-Lesevorrichtung. Die Systemleiterkarte enthält Schaltungen zur Ansteuerung der Antenne und zum Verarbeiten von mit der Antenne empfangenen RFID-Signalen. Alternativ zu einer Systemleiterkarte sind die weiteren Elemente der RFID-Lesevorrichtung zumindest teilweise separiert, das Hohlprofilelement umfasst also nur die Antenne oder nur einen Teil der weiteren Schaltungen der RFID-Lesevorrichtung. Auch ist denkbar, mehrere Hohlprofilelemente zu verwenden, die teilweise eine Systemleiterkarte umfassen und teilweise nicht, um so den Lesebereich durch zusätzliche Antennen zu erweitern.

Die Systemleiterkarte ist bevorzugt zugleich eine Kopplerleiterkarte für die Antenne. Das ist je nach Ausgestaltung der Antennenleiterkarte und der Außenkontur des Hohlprofilelements erforderlich, um die Antenne zu vervollständigen.

Vorzugsweise ist eine Vielzahl von Systemleiterkarten nebeneinander in das Hohlprofilelement eingesetzt. Dadurch wird die RFID-Lesevorrichtung auch in dieser Hinsicht modular und kann sehr einfach an verschiedene Längen angepasst werden. Obwohl dies möglich und die konsequenteste modulare Bauweise ist, müssen die Systemleiterkarten nicht zwingend untereinander gleichartig sein. So können unterschiedliche Systemleiterkarten als bloße Verbindungsstücke nur der Weiterleitung von Signalen dienen, die Antenne speisen, eine lokale Anzeige steuern oder RFID-Signale vorverarbeiten. Denkbar ist auch, dass die Systemleiterkarten jeden relevanten Abschnitt zu einem eigenen RFID-Lesemodul machen, so dass die Systemkarten untereinander ein modulares, vernetztes Lesesystem bilden.

Vorzugsweise weist die RFID-Lesevorrichtung einen Sensor zur Detektion der Anwesenheit von Objekten auf. Dieser Sensor ist beispielsweise ein optoelektronischer Sensor, wie eine Lichtschranke oder ein Lichttaster, kann aber auch auf einem anderen physikalischen Prinzip basieren wie ein Ultraschallsensor oder mechanisch etwa als Taster ausgebildet sein. Der zusätzliche Sensor hat beispielsweise die Aufgabe, als Trigger das Auslösen eines Transponders auszulösen. Der zusätzliche Sensor kann in das Gehäuse der Antenne integriert oder abgesetzt angeordnet sein.

In einer besonders bevorzugten Ausführungsform übernimmt die Antenne selbst die Funktion des zusätzlichen Sensors. Dafür wird die Anpassung der Antenne wiederholt abgefragt, um auf diese Weise eine Änderung der Umgebung zu erkennen. Die Antenne stimmt sich dabei beispielsweise selbst auf eine zusätzliche in das Regal gestellte Kiste nach und nimmt dies zugleich als Trigger für einen Lesevorgang an dieser Position.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung eines Regals mit einer RFID-Lesevorrichtung zur Regalbelegungserkennung;
- Fig. 2: eine Querschnittsdarstellung eines Hohlprofils mit einer Ausführungsform einer Antenne;
- Fig. 3: eine Querschnittsdarstellung eines Hohlprofils mit einer weiteren Ausführungsform einer Antenne;
- Fig. 4: eine Querschnittsdarstellung eines Hohlprofils, dessen Außenkontur durch Faltung selbst als Antennenstruktur dient;
- Fig. 5: eine dreidimensionale Darstellung des Hohlprofils gemäß Figur 4;
- Fig. 6: eine Draufsicht auf mehrere modular in ein Hohlprofil einsetzbare Antennenleiterkarten;
- Fig. 7a-c: eine Darstellung der jeweiligen Strahlungscharakteristik einer Antenne gemäß Figur 5 bei verschiedenen Kombinationen und Anpassungen von deren Einzelantennen.

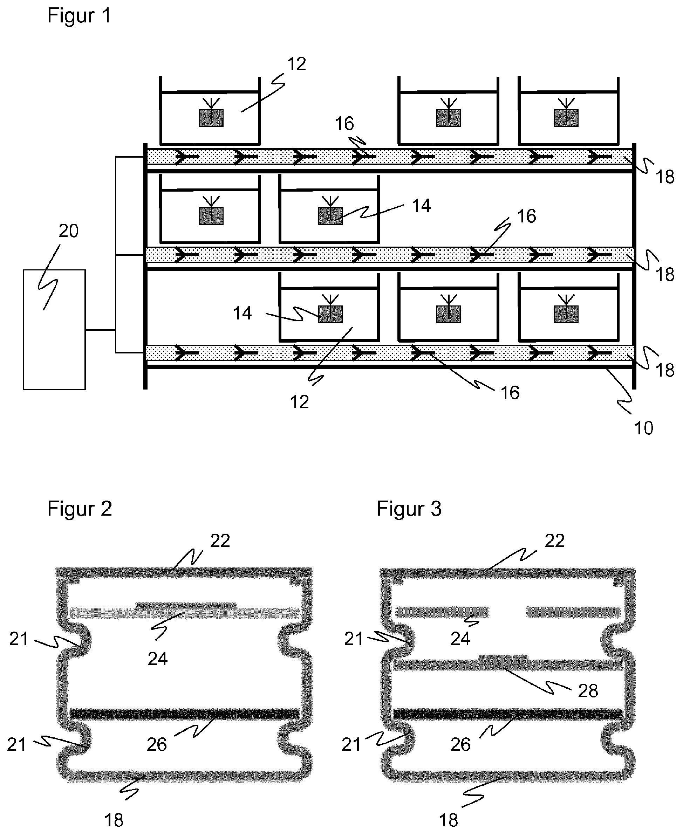

Figur 1 zeigt eine Übersichtsdarstellung eines Regals 10 mit einer Vielzahl von Fächern für Behälter 12, insbesondere Kanban-Behälter. In den Behältern 12 werden nicht dargestellte Objekte gelagert. In anderen Ausführungsformen können die Fächer abgetrennt beziehungsweise Objekte ohne Behälter 12 gelagert sein. Die Behälter 12 und/oder die darin befindlichen Objekte sind mit Transpondern 14 versehen.

An dem Regal 10 sind mehrere langgestreckte Antennen mit einer Vielzahl von Einzelantennen 16 angebracht. Die Antennen weisen jeweils als Gehäuse ein langgestrecktes Hohlprofil 18 auf, in das Leiterkarten eingesetzt sind. Der genaue Aufbau der Antennen wird weiter unten noch im Detail erläutert. Die Antennen sind Teil einer RFID-Lesevorrichtung 20, die in Figur 1 als abgesetzter Block dargestellt ist. Alternativ ist aber möglich, die RFID-Lesevorrichtung 20 zumindest teilweise oder auch vollständig in die Hohlprofile 18 zu integrieren.

Die RFID-Lesevorrichtung 20 liest die Transponder 14 in an sich bekannter Weise aus. Dadurch werden Objekte und Behälter 12 erkannt und bestimmten Lagerplätzen zugeordnet, also Positionen in dem Regal 10. Die RFID-Lesevorrichtung 20 oder ein übergeordnetes System (Warehouse Management, ERP), an das die RFID-Lesevorrichtung 20 angeschlossen ist, kennt auf diese Weise die jeweils aktuelle Belegung des Regals 10 mit Behältern 12 und Objekten. Übrigens soll der übliche Begriff RFID-Lesevorrichtung 20 keineswegs ausschließen, dass auch Transponder 14 beschrieben werden, wobei aber das Lesen in der Regel die wichtigere Aufgabe ist.

Den Behältern 12 oder den entsprechenden Regalabschnitten zugeordnet können an dem Hohlprofil 18 auch in Figur 1 nicht gezeigte Anzeige- oder Bedienelemente etwa in Form von Flüssigkristallanzeigen, Touchpads oder einfachen LEDs vorgesehen sein.

Dies dient dazu, dem Benutzer eine lokalisierte optische Rückmeldung zu geben oder Informationen zu dem Behälter 12 einzugeben oder dem übergeordneten Verwaltungssystem mitzuteilen. Anwendungsbeispiele sind Fehlermeldungen, Anzeigen des Belegungszustands, Anwesenheitsanzeige einer Behälters 12, Eingabe einer Auffüllung oder Entnahme, Anzeigen zu entnehmender oder nachzufüllender Objekte ("Pick-to-Light", "Put-to-Light"), Anzeigen von Zustandsinformationen der Antenne einschließlich einer aktuellen Aufteilung von Einzelantennen 16 zu Regalabschnitten oder die Anzeige der aus dem Transponder 14 ausgelesenen Information. Für die Anzeige der meisten dieser Informationen genügen einfache Blink- oder Farbcodes von kostengünstigen LEDs.

Die eigentliche Identifikation von Behältern 12 und darin befindlichen Objekten erfolgt über RFID-Lesungen. Trotzdem kann es sinnvoll sein, lediglich die Anwesenheit von Behältern 12 oder Objekten unabhängig von RFID-Lesungen zu bestimmen. Das dient beispielsweise dazu, gelesene RFID-Informationen zu lokalisieren, also bestimmten Objekten zuzuordnen, oder eine RFID-Lesung zu triggern. Dazu können ein oder mehrere nicht dargestellte zusätzliche Sensoren vorgesehen sein, etwa Lichtschranken, welche erkennen, ob sich an einer jeweiligen Position ein Behälter 12 befindet oder nicht. Das Einstellen eines Behälters 12 kann dann als Auslöser eines RFID-Lesevorgangs genutzt werden, so dass die möglichen Behälterpositionen gezielt und nicht blind beispielsweise in einem Zeitmultiplexverfahren abgefragt werden müssen. Ebenso können Entnehmen und Hinzufügen von Objekten erkannt werden. Der jeweilige zusätzliche Sensor kann in das Hohlprofil 18 integriert werden. Alternativ werden abgesetzte Sensoren an möglichen Behälterpositionen montiert.

Denkbar ist weiterhin, dass die Einzelantennen 16 selbst als zusätzliche Sensoren fungieren. Die Behälter 12 oder Objekte beeinflussen die Antenneneigenschaften, und dies kann von der Ansteuerung der Einzelantennen 16 erkannt werden, ohne dass tatsächlich RFID-Informationen gelesen werden. In dieser Ausführungsform werden demnach die Einzelantennen 16 wiederholt abgefragt, um Änderungen in deren Umgebung zu erkennen. Beispielsweise misst die RFID-Lesevorrichtung 20 eine Änderung der Anpassung einer Einzelantenne 16, passt diese Einzelantenne 16 neu an und nimmt dieses Ereignis zugleich als Auslöser für eine RFID-Lesung, da möglicherweise ein neuer Behälter 12 an eine zuvor leere Position des Regals 10 eingesetzt wurde oder auf andere Weise Transponder 14 in den Lesebereich gelangt sind.

Figur 2 zeigt eine Querschnittsdarstellung des Hohlprofils 18, das als Antennengehäuse dient. Das Hohlprofil 18 zeigt vorzugsweise über seine gesamte Länge den gleichen Querschnitt und wird beispielsweise durch Strangpressen hergestellt. So entsteht ein Hohlprofil 18 in benötigter Länge, oder es wird ein Teil in benötigter Länge aus einem mehrere Meter langen Rohling ausgesägt. Es ist auch denkbar, mehrere Hohlprofile 18 hintereinander anzuordnen und zu verbinden.

Durch seitliche Einbuchtung werden in dem Hohlprofil 18 Führungsnuten oder Führungsschienen 21 ausgebildet, welche Leiterkarten oder Einschubplatinen tragen, die in das Hohlprofil 18 eingesetzt oder eingeschoben werden. Nach oben hin wird das Hohlprofil 18 durch eine Abdeckung 22 geschlossen.

Eine Antennenleiterkarte 24 verleiht dem Hohlprofil 18 die gewünschten Antenneneigenschaften. Die Antennenleiterkarte 24 weist hier eine oder mehrere Patchantennen beziehungsweise eine andere kompakte Antennenbauform auf Keramikbasis als Einzelantennen 16 auf. Zusätzlich ist eine Systemleiterkarte 26 vorgesehen, auf der Schaltungen der RFID-Lesevorrichtung 20 zur Ansteuerung der Einzelantennen 16 untergebracht sind. Außerdem kann die Systemleiterkarte 26 eine Anzeige, eine LED sowie deren Ansteuerung tragen. Wird auf die Systemleiterkarte 26 verzichtet, so dient das Hohlprofil 18 mit der Antennenleiterkarte 24 als reine Antenne.

Figur 3 zeigt eine Querschnittsdarstellung einer weiteren Ausführungsform des Hohlprofils 1. Im Unterschied zu Figur 2 ist hier die Antenne ein Schlitzstrahler, wofür die Antennenleiterkarte 24 eine Schlitzstruktur aufweist und eine zusätzliche Kopplerleiterkarte 28 zu deren Speisung vorgesehen ist.

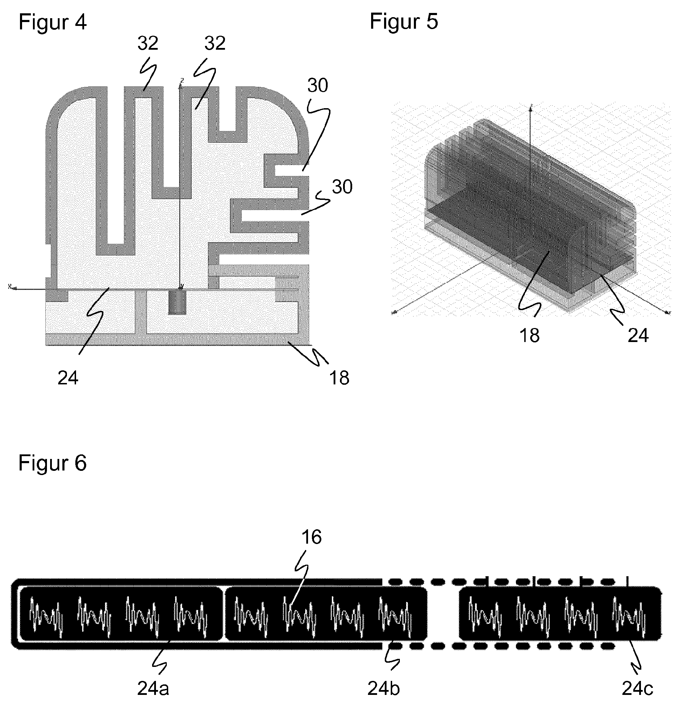

Figur 4 zeigt eine Querschnittsdarstellung eines Hohlprofils 18, dessen Außenkontur selbst als Antennenstruktur dient. Dazu wird die Außenkontur mehrfach gefaltet und bildet so eine Vielzahl von Einbuchtungen 30 und Vorsprüngen 32. Dadurch entsteht eine verästelte Struktur, so dass die für eine gewünschte Resonanzfrequenz erforderliche Länge eines Schlitzstrahlers trotz sehr kompakter Bauform erreicht wird. Die Antennenleiterkarte 24 fungiert hier als Kopplerleiterkarte zur Antennenspeisung. Sie kann außerdem in Doppelfunktion eine Systemleiterkarte für Schaltungen der Systemelektronik der RFID-Lesevorrichtung 20 bilden. In Figur 5 ist das Hohlprofil 18 gemäß Figur 4 noch einmal dreidimensional dargestellt.

Figur 6 zeigt eine Draufsicht auf eine modulare Anordnung mehrerer Antennenleiterkarten 24a-c, die hintereinander in das Hohlprofil 18 eingesetzt werden. Jede Antennenleiterkarte 24a-c kann selbst eine oder mehrere Einzelantennen 16 aufweisen.

Das Hohlprofil 18 sollte mit seiner Länge vorzugsweise typische Regalbreiten abdecken. Wie mehrfach erwähnt, ist es problemlos möglich, Hohlprofile 18 in nahezu jeder benötigten Länge herzustellen. Allerdings würde sich so noch ein hoher Variantenaufwand für die Antennenleiterkarten 24 ergeben. Das modulare Design gemäß Figur 6 mit mehreren Antennenleiterkarten 24a-c hintereinander reduziert diesen Aufwand erheblich, denn die Anzahl Einzelantennen 16 kann so praktisch beliebig gewählt werden. Unterschiedliche Gerätevarianten enthalten also abhängig von der Länge des Hohlprofils 18 eine entsprechende Anzahl identischer Antennenleiterkarten 24a-c. Die Einzelantennen 16 sind dabei sowohl einzeln als auch kombiniert ansprechbar, also beispielsweise schaltbar ausgebildet.

Die kompakten Antennenstrukturen können durch Veränderungen in der Umgebung beeinflusst werden, etwa durch das Regal 10, in welches die Hohlprofile 18 eingebaut werden. Auch Behälter 12 und darin befindliche Objekte und Inhalte können die Einzelantennen 16 verstimmen. Bei genügend räumlicher Nähe beeinflussen sich die Antennenstrukturen auch gegenseitig. Daher ist es vorteilhaft, solche Effekte durch Anpassungen zu kompensieren. Dies gelingt durch intelligente dynamische Anpassung der Antenneneigenschaften beispielsweise mit Hilfe von steuerbaren Kapazitäten auf der Antennenleiterplatte 24. Eine Änderung der Kapazität bewirkt eine Verschiebung der Resonanzfrequenz der Antenne. Durch geschickte Ansteuerung beziehungsweise Verstimmung der Einzelantennen 16 wird erreicht, dass die nicht genutzten Einzelantennen 16 nicht angeregt werden, da sie zu dem Zeitpunkt nicht in Resonanz sind. Das erhöht die Robustheit gegenüber Umgebungsänderungen und erreicht eine Entkopplung der Einzelantennen 16 untereinander.

Sofern keine festen Regalfächer vorgesehen sind, variiert die Aufteilung der Breite des Regals 10 in Breiten der Behälter 12 je nach Bedarf und definiert sich durch die tatsächlich verwendeten Behälter 12. Die Aufteilung kann auch während des Betriebes zumindest einige Male im Jahr wechseln. Das erfordert herkömmlich eine Umrüstung mit neuer Verkabelung. Durch den modularen Aufbau der Erfindung mit mehreren Antennenleiterkarten 24a-c beziehungsweise mehreren Einzelantennen 18 dagegen kann die Anpassung mit identischer Hardware und nur sehr geringem Aufwand erfolgen, um die RFID-Lesevorrichtung 20 an eine andere Aufteilung des Regals 10 in Positionen für Behälter 12 anzupassen.

Dazu wird ausgenutzt, dass die Einzelantennen 16 einzeln als auch kombiniert ansteuerbar sind. Deshalb erfordert die Anpassung auf die neue Aufteilung lediglich eine Änderung von Softwareparametern. Durch geschickte Verschaltung der Antennen kann der Sensor sehr spezifisch auf die Behälterreihenbreite und konkrete Tranponderposition angepasst werden, und durch das Kombinieren von Einzelantennen 16 ergibt sich auch die Möglichkeit, die Richtwirkung und den Gewinn der Einzelantennen 16 zu erhöhen. Selbst ansonsten schlecht lesbare Transponder 14 werden dadurch sicherer erfasst.

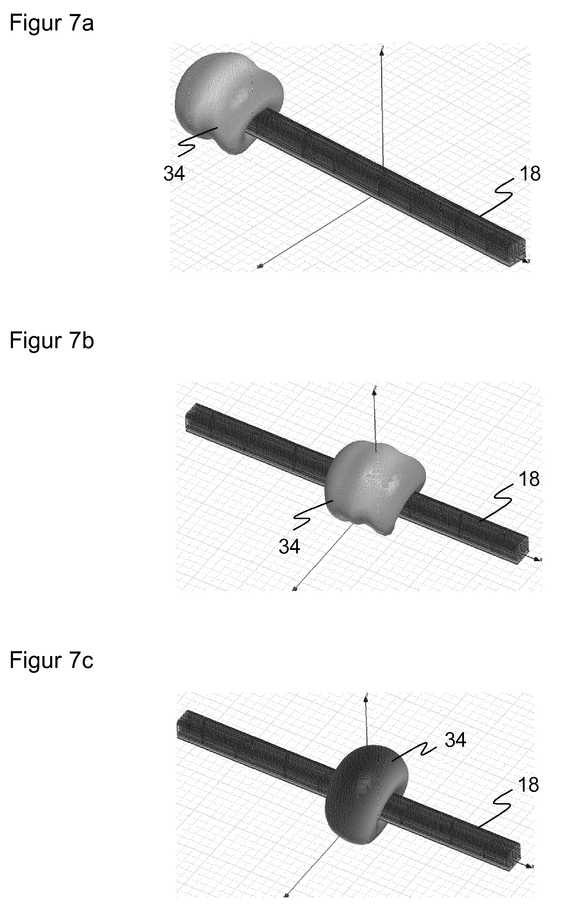

Figur 7 illustriert diese Anpassung der Antenneneigenschaften und zeigt die Strahlcharakteristiken 34 bei Betrieb verschiedener Einzelantennen 18 oder Kombinationen von Einzelantennen 16. In Figur 7a und 7b wird jeweils eine einzelne Antenne am Rand beziehungsweise in der Mitte des Hohlprofils 18 betrieben. Offensichtlich wird dadurch eine Lokalisierung auf einen bestimmten Abschnitt des Hohlprofils 18 und damit schon ein wesentlicher Schritt erreicht. Allerdings zeigt Figur 7c, dass sich durch den kombinierten Betrieb von mehreren Einzelantennen 16 die Strahlcharakteristik und Richtwirkung noch deutlich verbessern lässt, um wirklich nur Transponder 14 in dem gewünschten Abschnitt zu erfassen und für solche Transponder 14 auch besonders empfindlich zu sein.

## Patentansprüche

1. RFID-Lesevorrichtung (20) mit einer Antenne (16, 18, 24) zur Regalbelegungserkennung, wobei die Antenne (16, 18, 24) ein langgestrecktes Gehäuse (18) und eine in dem Gehäuse (18) angeordnete Antennenleiterkarte (24) aufweist, **dadurch gekennzeichnet,**
**dass** das Gehäuse (18) ein Hohlprofilelement (18) aufweist, in dem durch seitliche Einbuchtungen Führungsnuten oder Führungsschienen zum Tragen von Leiterkarten (24, 26) ausgebildet sind, und dass die Antennenleiterkarte (24) und zusätzlich mindestens eine Systemleiterkarte (26) mit Schaltungen der RFID-Lesevorrichtung (20) zur Ansteuerung der Antenne (16, 18, 24) und zum Verarbeiten von mit der Antenne (16, 18, 24) empfangenen RFID-Signalen in das Hohlprofil (18) eingesetzt sind.

2. RFID-Lesevorrichtung (20) nach Anspruch 1,
wobei das Hohlprofilelement (18) über seine gesamte Länge den gleichen Querschnitt aufweist, insbesondere ein Strangpressprofil ist.

3. RFID-Lesevorrichtung (20) nach einem der vorhergehenden Ansprüche, wobei die Antennenleiterkarte (24) eine Schlitzstruktur oder einen Antennenpatch aufweist.

4. RFID-Lesevorrichtung (20) nach einem der Ansprüche 1 bis 3,
wobei das Hohlprofilelement (18) im Querschnitt eine gefaltete Außenkontur mit einer Vielzahl von Einbuchtungen (30) und/oder Vorsprüngen (32) aufweist.

5. RFID-Lesevorrichtung (20) nach einem der vorhergehenden Ansprüche, wobei eine Vielzahl von Antennenleiterkarten (24a-c) nebeneinander in das Hohlprofilelement (18) eingesetzt und auf diese Weise eine Vielzahl von Antennenmodulen (24a-c, 16) gebildet ist.

6. RFID-Lesevorrichtung (20) nach Anspruch 5,
wobei die Antennenmodule (24a-c, 16) einzeln oder kombiniert ansteuerbar sind, um mit der Antenne Transponder (14) an einem bestimmten Antennenabschnitt zu lesen.

7. RFID-Lesevorrichtung (20) nach Anspruch 5 oder 6,
die dafür ausgebildet ist, Antennenmodule (24a-c, 16) und Regalabschnitte einander zuzuordnen.

8. RFID-Lesevorrichtung (20) nach einem der Ansprüche 5 bis 7,
wobei die Antenne den Antennenmodulen (24a-c, 16) zugeordnete Anzeigeelemente aufweist.

9. RFID-Lesevorrichtung (20) nach einem der vorhergehenden Ansprüche,
wobei die Antennenleiterkarte (24) Anpassungselemente zur Anpassung der Antenneneigenschaften aufweisen.

10. RFID-Lesevorrichtung (20) nach einem der vorhergehenden Ansprüche,
wobei das Hohlprofilelement (18) parallel zu Regalelementen (10) angeordnet oder als Regalelement (10) genutzt ist.

11. RFID-Lesevorrichtung nach einem der vorhergehenden Ansprüche,
wobei die Systemleiterkarte (26) zugleich eine Kopplerleiterkarte (28) für die Antenne ist.

12. RFID-Lesevorrichtung (20) nach einem der vorhergehenden Ansprüche,
wobei eine Vielzahl von Systemleiterkarten (26) nebeneinander in das Hohlprofilelement (18) eingesetzt ist.

13. RFID-Lesevorrichtung (20) nach einem der vorhergehenden Ansprüche,
die einen Sensor zur Detektion der Anwesenheit von Objekten aufweist, wobei insbesondere die Antenne (16, 18, 24) als dieser Sensor fungiert.

14. Verwendung einer RFID-Lesevorrichtung (20) nach einem der vorhergehenden Ansprüche zum Auslesen von RFID-Transpondern (14) an Regalfächern oder Objekten in den Regalfächern zur Regalbelegungserkennung.

## Claims

1. An RFID reading apparatus (20) having an antenna (16, 18, 24) for shelf occupancy detection, wherein the antenna (16, 18, 24) comprises an elongated housing (18) and an antenna circuit board (24) arranged in the housing (18),
**characterized in that** the housing (18) comprises a hollow profile element (18) in which guide grooves or guide rails for supporting circuit boards (24, 26) are formed by lateral recesses, and **in that** the antenna circuit board (24) and additionally at least one system circuit board (26) having circuits of the RFID reading apparatus (20) for controlling the antenna (16, 18, 24) and for processing RFID signals received by the antenna (16, 18, 24) are inserted into the hollow profile element (18).

2. The RFID reading apparatus (20) according to claim 1,
wherein the hollow profile element (18) has the same cross section over its entire length, in particular is an extruded profile.

3. The RFID reading apparatus (20) according to any of the preceding claims,
wherein the antenna circuit board (24) comprises a slot structure or an antenna patch.

4. The RFID reading apparatus (20) according to any of claims 1 to 3,
wherein the hollow profile element (18), in cross section, has a folded outer contour with a plurality of notches (30) and/or projections (32).

5. The RFID reading apparatus (20) according to any of the preceding claims,
wherein several antenna circuit boards (24a-c) are inserted into the hollow profile element (18) next to one another, and thus a plurality of antenna modules (24a-c, 16) are formed.

6. The RFID reading apparatus (20) according to claim 5,
wherein the antenna modules (24a-c, 16) are controlled individually or in combination in order to read transponders (14) with the antenna at a specific antenna section.

7. The RFID reading apparatus (20) according to claim 5 or 6,
which is configured to associate antenna modules (24a-c, 16) with shelf sections.

8. The RFID reading apparatus (20) according to any of claims 5 to 7,
wherein the antenna comprises display elements associated with the antenna modules (24a-c, 16).

9. The RFID reading apparatus (20) according to any of the preceding claims,
wherein the antenna circuit board (24) comprises matching elements for matching antenna characteristics.

10. The RFID reading apparatus (20) according to any of the preceding claims,
wherein the hollow profile element (18) is arranged parallel to shelf elements (10) or is used as a shelf element (10).

11. The RFID reading apparatus (20) according to any of the preceding claims,
wherein the system circuit board (26) also is a coupling circuit board (28) for the antenna.

12. The RFID reading apparatus (20) according to any of the preceding claims,
wherein a plurality of several system circuit boards (26) are inserted next to one another into the hollow profile element (18).

13. The RFID reading apparatus (20) according to any of the preceding claims, comprising a sensor for object presence detection, wherein in particular the antenna (16, 18, 24) is used as the sensor.

14. Use of an RFID reading apparatus (20) according to any of the preceding claims for reading RFID transponders (14) on shelves or objects on the shelves for shelve occupancy detection.

## Revendications

1. Dispositif de lecture RFID (20) avec une antenne (16, 18, 24) pour la reconnaissance d'occupation d'étagères, dans lequel l'antenne (16, 18, 24) comprend un boîtier étiré en longueur (18) et une carte à circuits d'antenne (24) agencée dans le boîtier (18),
**caractérisé en ce que**
le boîtier (18) comprend un élément profilé creux (18) dans lequel sont réalisés, par enfoncement latéral, des gorges de guidage ou des rails de guidage pour porter des cartes à circuits (24, 26), et **en ce que** la carte à circuits d'antenne (24) et en supplément au moins une carte à circuits de système (26) avec des circuits du dispositif de lecture RFID (20) pour le pilotage de l'antenne (16, 18, 24) et pour le traitement de signaux RFID reçus avec l'antenne (16, 18, 24) sont mises en place dans le profilé creux (18).

2. Dispositif de lecture RFID (20) selon la revendication 1,
dans lequel l'élément profilé creux (18) présente sur la totalité de sa longueur la même section transversale, et est en particulier un profilé extrudé.

3. Dispositif de lecture RFID (20) selon l'une des revendications précédentes,
dans lequel la carte à circuits d'antenne (24) comprend une structure à fentes ou une structure en patch d'antenne.

4. Dispositif de lecture RFID (20) selon l'une des revendications 1 à 3, dans lequel l'élément profilé creux (18) présente en section transversale un contour extérieur replié avec une pluralité de creux (30) et/ou de saillies (32).

5. Dispositif de lecture RFID (20) selon l'une des revendications précédentes,
dans lequel une pluralité de cartes à circuits d'antenne (24a-c) sont mises en place les unes à côté des autres dans l'élément profilé creux (18) et, de cette manière, il est formé une pluralité de modules d'antenne (24a-c, 16).

6. Dispositif de lecture RFID (20) selon la revendication 6,
dans lequel les modules d'antenne (24a-c, 16) sont susceptibles d'être pilotés individuellement ou en combinaison, afin de lire avec l'antenne des transpondeurs (14) au niveau d'un tronçon déterminé de l'antenne.

7. Dispositif de lecture RFID (20) selon la revendication 5 ou 6,
qui est réalisé pour associer les uns aux autres des modules d'antenne (24a-c, 16) et des tronçons d'étagères.

8. Dispositif de lecture RFID (20) selon l'une des revendications 5 à 7, dans lequel l'antenne comprend des éléments d'affichage associés aux modules d'antenne (24a-c, 16).

9. Dispositif de lecture RFID (20) selon l'une des revendications précédentes,
dans lequel la carte à circuits d'antenne (24) comprend des éléments d'ajustement pour ajuster les propriétés de l'antenne.

10. Dispositif de lecture RFID (20) selon l'une des revendications précédentes,
dans lequel l'élément profilé creux (18) est agencé parallèlement aux éléments d'étagères (10) ou est utilisé comme élément d'étagère (10).

11. Dispositif de lecture RFID selon l'une des revendications précédentes,
dans lequel la carte à circuits de système (26) est simultanément une carte à circuits de couplage (28) pour l'antenne.

12. Dispositif de lecture RFID (20) selon l'une des revendications précédentes,
dans lequel une pluralité de cartes à circuits de système (26) sont mises en place les unes à côté des autres dans l'élément profilé creux (18).

13. Dispositif de lecture RFID (20) selon l'une des revendications précédentes,
qui comprend un capteur pour la détection de la présence d'objets, et dans lequel l'antenne (16, 18, 24) fait en particulier office de capteur.

14. Utilisation d'un dispositif de lecture RFID (20) selon l'une des revendications précédentes pour lire des transpondeurs RFID (14) sur des casiers d'étagères ou des objets dans les casiers d'étagères pour la reconnaissance d'occupation des étagères.
